# EUROPEAN PATENT SPECIFICATION

(11) **EP 1 207 190 B1**
(45) Date of publication and mention of the grant of the patent: **06.09.2006**
(21) Application number: 01126576.6
(22) Date of filing: 14.07.1995
(51) Int. Cl.: C10J 3/20, C10J 3/64

(54) **Fixed bed gasification furnace for organic waste**
Festbettvergaser für organische Abfälle
Gazéificateur à lit fixe pour déchets organiques

(30) Priority: 01.12.1994 JP 29818794
(43) Date of publication of application: 22.05.2002
(62) Divisional of application: 95111105.3
(73) Proprietor: MITSUBISHI JUKOGYO KABUSHIKI KAISHA, Tokyo 100 (JP)
(72) Inventor: Arima, Kenichi, Nagasaki R&D Center, Nagasaki-shi, Nagasaki-ken (JP); Soda, Masahiro, Nagasaki R&D Center, Nagasaki-shi, Nagasaki-ken (JP); Yamamoto, Hisao, Nagasaki-shi, Nagasaki-ken (JP); Sakai, Masayasu, Nagasaki-shi, Nagasaki-ken (JP); Ohta, Hideaki, Nagasaki R&D Center, Nagasaki-shi, Nagasaki-ken (JP); Fujioka, Yuichi, Nagasaki R&D Center, Nagasaki-shi, Nagasaki-ken (JP)
(74) Representative: Behrens, Dieter

(56) References cited:
- DE-A- 2 520 492
- DE-A- 2 622 266

## Description

### BACKGROUND OF THE INVENTION

### 1. Field of the Invention

The present invention generally relates to the combustion of organic waste, such as scrap tires and waste plastics. More specifically, the invention relates to a fixed-bed gasification furnace for gasifying such organic waste and also for producing carbon black, and a method for gasifying organic waste or for producing carbon black from such waste by using such a furnace.

### 2. Description of the Related Art

Conventionally, organic waste such as scrap tires and waste plastics has been directly incinerated only for the purpose of generating steam by means of a heat exchanger and utilizing the steam as a heat source. Thus, such organic waste has not practically been used as an ingredient or resource for other products.

When scrap tires are taken as an example of organic waste, they are composed of 50-60 % of volatiles, 20-30 % of fixed carbon, and 10-15 % of inorganic matter such as steel and ash, as shown in Table 1. Since scrap tires include steel wires, it is difficult to crush them into small pieces. Accordingly, it has been conventional practice to burn whole scrap tires in a stoker or kiln or to crush scrap tires to about 10 cm cubes and burn them in a stoker or kiln. However, these combustion methods involve the following problems:
(1) If scrap tires are burned with the aid of air, volatiles present therein decompose and burn rapidly. As a result, a high temperature of 1,500°C or above is attained locally, tending to cause damage to the furnace. Moreover, large amounts of soot and tar are produced from the flame, requiring after-treatment.
(2) Fixed carbon has such a low burning rate that it may form a residue in admixture with inorganic matter. This residue is not easy to dispose of.
(3) On the other hand, if scrap tires are burned with a gaseous mixture of air and combustion exhaust gas, the problem described in the above paragraph (1) is alleviated. However, the problem described in the above paragraph (2) is aggravated owing to an increase in residual fixed carbon. Thus, it is impossible to have an overall solution.

For these reasons, it is difficult to dispose of organic waste such as scrap tires. In the present state of the art, it has been impossible to reclaim resources from such waste.

**Table 1: Composition of tires**

| Component | | Content (%) |
|---|---|---|
| Volatiles | Raw rubber | 40-50 |
| | Oil | 5-10 |
| Fixed carbon | | 20-30 |
| Steel & ash | | 10-15 |

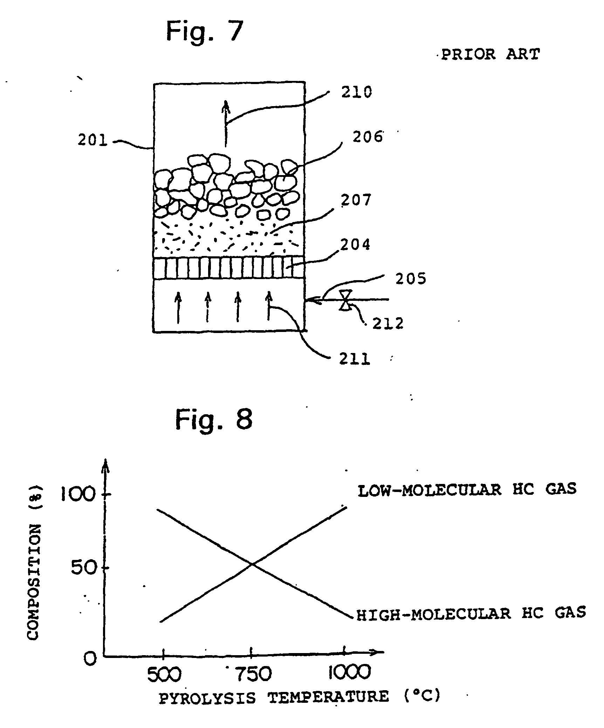

With respect to the present invention, an example of a conventional fixed-bed gasification furnace for gasifying organic waste such as scrap tires and waste plastics is illustrated in Fig. 7. In the fixed-bed gasification furnace 201 of Fig. 7, volatiles present in organic waste 206 fed from above are pyrolyzed and gasified by the heat evolved as a result of the partial combustion of fixed carbon present in the underlying residue, thus yielding a residue 207 consisting largely of fixed carbon. The fixed carbon present in residue 207 is partially burned and gasified with a gasifying agent 211 which is a mixture of an oxygen-containing gas and steam and which is supplied to a space below a perforated plate 204 through a valve 212, and the fixed carbon serves to supply the heat required to pyrolyze the volatiles. The gas produced by the pyrolysis and gasification of volatiles and the gas produced by the gasification of fixed carbon are mixed together and withdrawn as an organic waste-gasified gas 210. The reactions occurring during this process are represented by the following equations (1), (2) and (3).

C + O₂---> CO + CO₂ + Q₁ (exothermic ) (1)

(Supply of the heat of reaction by the partial combustion and gasification of fixed carbon)

C + H₂O---> CO + H₂ -Q₃ (endothermic) (2)

(Gasification by the reaction of fixed carbon with steam)

CₙHₘ---> Cₙ₁Hₘ₁ - Q₂ (endothermic) (3)

(n > n1, m > m1)
(Pyrolysis and gasification of volatiles)

If the pyrolysis temperature of volatiles is high (e.g., 700°C or above), C-C bonds are severed extensively, so that a low-molecular hydrocarbon gas consisting of low-molecular components such as methane (CH₄), ethane (C₂H₆) and ethylene (C₂H₄) are produced in high proportions. On the other hand, if the pyrolysis temperature is low (e.g., 500-700°C), a high-molecular hydrocarbon gas containing aromatic compounds such as benzene (C₆H₆), toluene (C₇H₈) and naphthalene (C₁₀H₈) is produced. This situation is schematically shown in Fig. 8.

When a gas obtained by the gasification of organic waste is used as the raw material for the formation of carbon black, the gas produced in the gasification furnace is introduced into a combustion furnace for the formation of carbon black, and burned in a low-oxygen environment to form carbon black. During this process, a gas consisting of low-molecular components is predominantly burned by reaction with oxygen, creating a high-temperature field. In this high-temperature field, a high-molecular hydrocarbon gas undergoes dehydrogenation and polycondensation repeatedly and thereby grows to form carbon black. That is, in order to enhance the yield of carbon black, it is preferable to increase the content of high-molecular components, such as naphthalene (C₁₀H₈) and anthracene (C₁₄H₁₀), in the gas obtained by the gasification of organic waste. To this end, it is preferable to carry out the pyrolysis of volatiles at a temperature of 500-700°C.

If the pyrolysis temperature is higher than 700°C, C-C bonds present in volatiles will be severed extensively to produce low-molecular hydrocarbons, such as methane (CH₄), ethane (C₂H₆) and ethylene (C₂H₄). If it is lower than 500°C, the pyrolysis will not proceed satisfactorily.

Usually, the quantity of heat required to pyrolyze and gasify volatiles at a temperature of 500-700°C will be only about 5-10 of the total quantity of heat possessed by organic waste. Where the content of fixed carbon in organic waste is high (e.g., 20 %), the combustion of all fixed carbon will evolve an excessive quantity of heat.

Thus, where it is desired to produce a high-molecular hydrocarbon gas from volatiles in the gasification of organic waste, the following problems arise. They make it difficult to control the pyrolysis temperature of volatiles so as to remain in an appropriate range.
(1) If the feed rate of oxygen is reduced to decrease the amount of fixed carbon undergoing partial combustion (i.e., the heat of combustion, Q₁, of fixed carbon) and thereby lower the pyrolysis temperature, a residue containing fixed carbon is left. This residue is not easy to dispose of.
(2) Contrary, if fixed carbon is partially burned at a sufficiently high feed rate of oxygen so as not to leave any residual fixed carbon, the heat of combustion is increased to raise the pyrolysis temperature. As a result, a high-molecular hydrocarbon gas cannot be obtained.
(3) The reaction temperature can be lowered by adding steam to the gasifying agent. However, if the feed rate of steam is raised to increase the quantity of heat (Q₃) absorbed by the reaction of fixed carbon with steam, fixed carbon and unreacted steam react with the high-molecular hydrocarbon gas produced by the pyrolysis of volatiles, resulting in the formation of low-molecular hydrocarbons.

   Cₙ₁Hₘ₁ + H₂O---> Cₙ₂Hₘ₂ + CO + H₂ - Q₄ (4)

   (n1 > n2, m1 > m2)

Furthermore, as noted above, a proper temperature control is required to obtain a gas having a composition suitable for use as the raw material for the production of carbon black. In conventional fixed-bed gasification furnaces, the feed rate of the whole gasifying agent is usually controlled in response to the height of the organic waste layer within the furnace and this involves the following problems.

If the feed rate of organic waste varies, the resulting change in the feed rate of the gasifying agent is delayed because of the time lag of the change in the height of the organic waste layer. This causes the gasifying agent/organic waste ratio to become unbalanced. As a result, the supply of heat by the partial combustion and gasification of fixed carbon according to the above equations (1) and (2) also becomes unbalanced, so that the internal temperature of the gasification furnace may be fluctuated. Thus, the pyrolysis temperature of volatiles depending on equation (3) may be fluctuated to depart from its appropriate range. That is, if the feed rate of organic waste decreases, the gasifying agent/organic waste ratio temporarily becomes unduly high, resulting a rise in pyrolysis temperature. Contrarily, if the feed rate of organic waste increases, the gasifying agent/organic waste ratio temporarily becomes unduly low, resulting a reduction in pyrolysis temperature. Consequently, the properties of the resulting organic waste- gasified gas are fluctuated, bringing about unstable operation of the succeeding process (such as carbon black production process) using that gas.

Also, in order to hold down the pyrolysis temperature of volatiles, the partial combustion/gasification temperature of fixed carbon needs to be held down. Since the reaction rate of fixed carbon is reduced thereby, the organic waste layer becomes thick, requiring a large-sized fixed-bed gasification furnace.

German patent publication nos. DE 25 20 492 and DE 26 22 266 disclose arrangements for the thermal treatment of organic material, and particularly carbon-based solid fuel material. DE 26 22 266 is especially concerned with the generation of gas from such material.

### SUMMARY OF THE INVENTION

It is an object of the present invention, in view of difficulties experienced in controlling the pyrolyzing temperature, to provide a fixed-bed gasification furnace which can pyrolyze volatiles present in organic waste in a temperature range suitable for the production of a high-molecular hydrocarbon gas without leaving any residual fixed carbon, as well as a method for gasifying organic waste by using such a furnace.

The present invention provides a fixed-bed gasification furnace having the features recited in claim 1. The invention also provides a method for the gasification of organic waste having the features recited in claim 2.

According to the present invention, there is provided:

A fixed-bed gasification furnace wherein a gasifying agent comprising an oxygen-containing gas is supplied to said furnace charged with organic waste, volatiles present in the organic waste are pyrolyzed and gasified in the upper part of said furnace, and the residual fixed carbon is gasified by reaction with the gasifying agent in the lower part of said furnace and also serves to supply the heat for pyrolysis of the volatiles, said furnace comprising two divided internal sections: a volatiles pyrolysis section for gasifying a portion of the residual fixed carbon by reaction with the gasifying agent and for pyrolyzing and gasifying the volatiles by the heat so evolved; and a fixed carbon partial combustion/gasification section for reacting surplus fixed carbon with the gasifying agent.

In a further development of this furnace there is provided a first pipeline for supplying a first gasifying agent mainly to said volatiles pyrolysis section; and a second pipeline for supplying a second gasifying agent mainly to said fixed carbon partial combustion/gasification section, so as to allow the compositions and feed rates of the first and second gasifying agents to be controlled independently.

Furthermore, there is provided a method for the gasification of organic waste which comprises the steps of providing a fixed-bed gasification furnace which comprises two divided internal sections: a volatiles pyrolysis section for gasifying a portion of residual fixed carbon by reaction with a first gasifying agent and for pyrolyzing and gasifying volatiles by the heat so evolved, and a fixed carbon partial combustion/gasification section for reacting only surplus fixed carbon with a second gasifying agent; feeding organic waste to said furnace; and controlling the composition and feed rate of the first and second gasifying agents for gasifying the organic waste, so that the temperature of said volatiles pyrolysis section is in the range of 500 to 700°C and the temperature of said fixed carbon partial combustion/ gasification section is in the range of 700 to 1,500°C.

The fixed-bed gasification furnace of the present invention and the gasification method using this furnace make it possible to produce a high-molecular hydrocarbon gas containing aromatic compounds from organic waste such as scrap tires and, moreover, to gasify such organic waste completely without leaving any residual fixed gas. The organic waste-gasified gas obtained according to the invention which contains a high-molecular hydrocarbon gas at a high concentration is especially suitable for use as a raw material for the manufacture of carbon black.

### BRIEF DESCRIPTION OF THE DRAWINGS

Fig. 1 is a schematic representation of a first embodiment of the fixed-bed gasification furnace of the present invention;
Fig. 2 is a schematic representation of a second embodiment of the fixed-bed gasification furnace of the invention;
Fig. 3 is a graph showing the relationships between the air/fixed carbon ratio λ_{c} and the fixed carbon gasification temperature T_{c} and between the air/fixed carbon ratio λ_{c} and the temperature T_{g}1 after the pyrolysis and gasification of volatiles by using all of the resulting fixed carbon-gasified gas, as determined in a case where scrap tires are gasified with the aid of air;
Fig. 4 is a graph showing the relationship between the distribution ratio a of the fixed carbon-gasified gas distributed between two divisions of the gasification furnace and the temperature T_{g}2 after the pyrolysis and gasification of volatiles;
Fig. 5 is a schematic view illustrating an example of the fixed-bed gasification furnace of the invention;
Fig. 6 is a schematic view illustrating another example of the fixed-bed gasification furnace of the invention;
Fig. 7 is a schematic representation of an example of a conventional furnace for the gasification of organic waste; and
Fig. 8 is a graph schematically showing the relationship between the pyrolysis temperature of organic waste and the composition of the gas so produced.

### DETAILED DESCRIPTION OF THE PREFERRED EMBODIMENTS

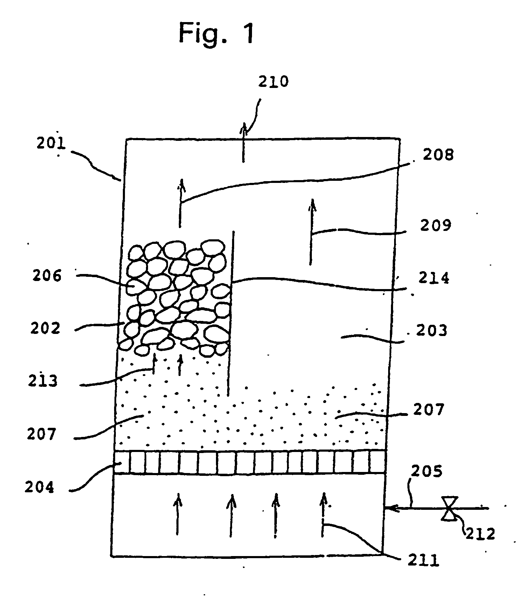

The present invention will now be explained with reference to Figs. 1-6.

Fig. 1 is a schematic representation of a first embodiment of the fixed-bed gasification furnace of the present invention. The internal space of this fixed-bed gasification furnace 201 is vertically divided by a partition (such as dividing plate) 214 into two sections, i.e., a volatiles pyrolysis section 202 and a fixed carbon partial combustion/ pyrolysis section 203. Under partition 214, a space is formed so as to allow the residue consisting largely of fixed carbon 207 to move from volatiles pyrolysis section 202 to fixed carbon partial combustion/pyrolysis section 203. Organic waste (such as scrap tires and waste plastics) 206 is fed to volatiles pyrolysis section 202, where volatiles present in organic waste 206 are heated by the fixed carbon combustion gas 213 resulting from the partial combustion of a portion of fixed carbon 207, and thereby pyrolyzed and gasified to produce a volatiles- gasified gas 208. The remainder of fixed carbon 207 moves to fixed carbon partial combustion/pyrolysis section 203, where it is partially burned to produce a fixed carbon-gasified gas 209. In the upper part of fixed-bed gasification furnace 201, volatiles-gasified gas 208 and fixed carbon-gasified gas 209 are mixed together to produce an organic waste-gasified gas 210. Reference numeral 211 designates a gasifying agent supplied to a space below a perforated plate 204 through a gasifying agent supply pipeline 205 equipped with a valve 212.

In this gasification furnace, the temperature of volatiles pyrolysis section 202 is controlled so as to be in the range of 500 to 700°C. If the temperature is lower than 500°C, the pyrolysis reaction will not proceed satisfactorily, while if it is higher than 700°C, the proportion of a high-molecular hydrocarbon gas will undesirably be reduced as stated before.

The temperature of fixed carbon partial combustion/pyrolysis section 203 should be in the range of about 700 to 1,500°C, though it may vary according to the air ratio and other factors. If the temperature is lower than 700°C, partial combustion will not be sustained, while if the temperature is higher than 1,500°C, problems such as furnace damage may arise.

The temperatures of volatiles pyrolysis section 202 and fixed carbon partial combustion/pyrolysis section 203 can be controlled by regulating the feed rate of gasifying agent 211 (i.e., the air ratio) and the distribution ratio.

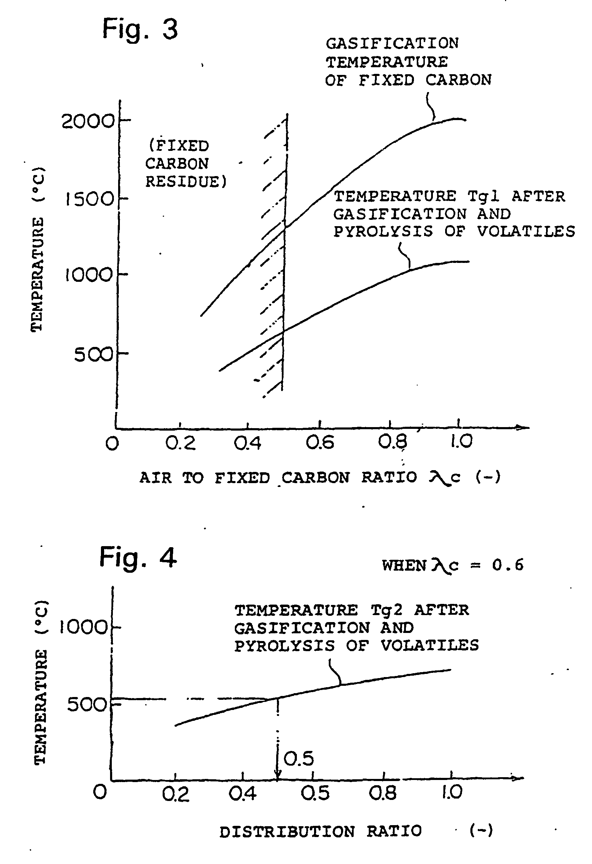

For example, when the air ratio with respect to fixed carbon (i.e., the proportion of air to its stoichiometric amount for a given amount of combustibles) λ_{c}, is varied in a case where scrap tires are gasified with the aid of air, the fixed carbon gasification temperature T_{c} and the temperature T_{g}1 after the pyrolysis and gasification of volatiles by using all of the resulting fixed carbon-gasified gas change as shown in Fig. 3. As is obvious from Fig. 3, fixed carbon remains when λ_{c} ≤ 0.5. On the other hand, T_{g}1 exceeds 750°C when λ_{c} ≥ 0.6, so that a volatiles-gasified gas having a high content of high-molecular components cannot be produced. That is, the appropriate range of the air/fixed carbon ratio is so narrow that the temperature control is difficult.

However, when the internal space of the gasification furnace is divided into a volatiles pyrolysis section and a fixed carbon partial combustion/pyrolysis section and the fixed carbon-gasified gas is distributed between these sections, the relationship between the temperature T_{g}2 after the pyrolysis and gasification of volatiles and the distribution ratio a is as shown in Fig. 4, even at a λ_{c} of 0.6. Thus, T_{g}2 can be kept within the range of 500 to 700°C.

The high-molecular components such as aromatic hydrocarbons present in the volatiles-gasified gas once produced are stable at temperatures up to about 850°C. Even if the volatiles-gasified gas is mixed with the bypassed fixed carbon-gasified gas, the former is heated only to about 750°C and hence undergoes no compositional change.

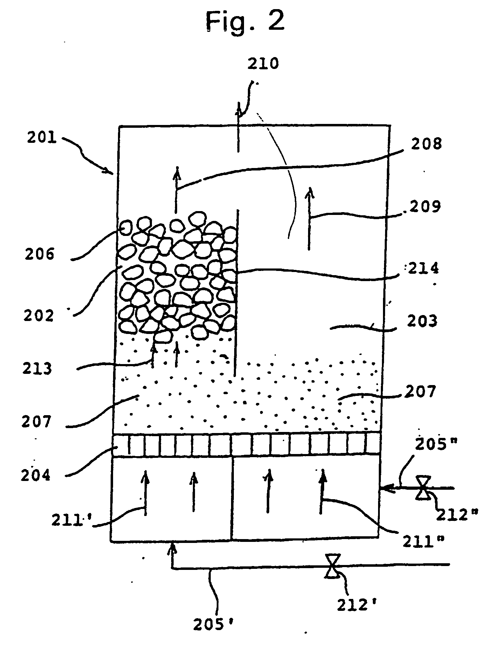

Fig. 2 is a schematic representation of a second embodiment of the fixed-bed gasification furnace of the present invention. This gasification furnace is substantially the same as that of Fig. 1, except that the former has two gasifying agent supply pipelines 205' and 205" which make it possible to supply two gasifying agents 211' and 211" having different compositions and feed rates through valves 212' and 212", respectively. In this manner, gasifying agents having different compositions and feed rates can be separately supplied to the volatiles pyrolysis section and the fixed carbon partial combustion/pyrolysis section, so that the temperature control becomes easier.

As the gasifying agent, there may be used an oxygen-containing gas such as air or a gas having steam added thereto. When the gasifying agent contains steam, it has the effect of reducing the partial combustion/gasification temperature according to the above-described equation (3). However, if unreacted steam comes into contact with the volatiles-gasified gas in the upper part of the gasification furnace, the high-molecular hydrocarbon gas is converted into a low-molecular one according to the above-described equation (4). Accordingly, steam should be added in such an amount that the molar equivalent ratio of steam to fixed carbon (H₂O/C) is not greater than 1.

Where two gasifying agent supply pipelines for supplying gasifying agents having different compositions to the volatiles pyrolysis section and the fixed carbon partial combustion/pyrolysis section are provided as seen in the gasification furnace of Fig. 2, it is preferable to omit the supply of steam to the volatiles pyrolysis section or supply steam to the volatiles pyrolysis section at a lower feed rate than to the fixed carbon partial combustion/pyrolysis section.

The present invention is more specifically explained with reference to the following examples.

### (Example 1)

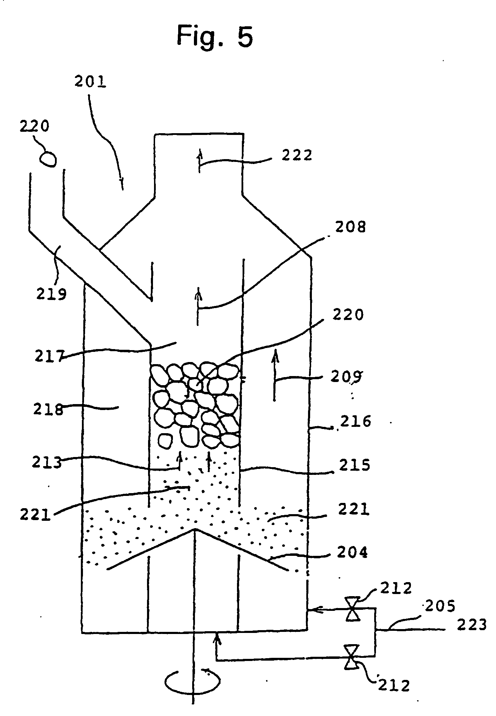

Fig. 5 is a schematic view illustrating an example of the fixed-bed gasification furnace of the present invention. This fixed-bed gasification furnace 201 has a gently sloping rotatable conical perforated plate 204 and an inner casing 215 defining an A-compartment 215 (i.e., a volatiles pyrolysis section) above it, within an outer casing 216 constituting the outer wall of fixed-bed gasification furnace 201. Inner casing 215 and outer casing 216 are dimensioned so that the ratio of the cross-sectional area of inner casing 215 to the crosssectional area of the space between inner casing 215 and outer casing 216 (i.e., a B-compartment 218 constituting a fixed carbon partial combustion/gasification section) is equal to about 1:1. To a space below perforated plate 204, air 223 is supplied as a gasifying agent through a gasifying agent supply pipeline 205 and valves 212.

Using this fixed-bed gasification furnace 201, scrap tires providing a typical example of organic waste were subjected to a gasification test. Excepting steel and ash, scrap tires contain about 70% by weight of volatiles (such as raw rubber and oil) and about 30% by weight of carbon black (fixed carbon).

Scrap tires 220, which had been cut into pieces, were fed to the upper part of A-compartment 217 within inner casing 215 through a charging chute 219. These scrap tires 220 were heated by a gas produced in the lower part of A-compartment 217 as a result of the partial combustion of a portion of the fixed carbon present in residue 221 with the aid of air 223 supplied as a gasifying agent through one valve 212, so that volatiles present therein were pyrolyzed and gasified to produce a volatiles-gasified gas 208. After removal of the volatiles, the resulting residue (consisting largely of fixed carbon) 221 moved to B-compartment 218 with the rotation of perforated plate 204, and was partially burned and gasified with the aid of air 223 supplied as a gasifying agent through the other valve 212. The fixed carbon-gasified gas 209 so produced was mixed with volatiles-gasified gas 208 in the upper part of the gasification furnace to produce a scrap tire-gasified gas 222.

The proportions of the gasifying agents supplied to A-compartment 217 and B-compartment 218 may be arbitrarily regulated according to the composition of organic waste used and other factors. Besides an oxygen-containing gas such as air, such a gas having an appropriate amount of steam added thereto can also be used as the gasifying agent.

### (Example 2)

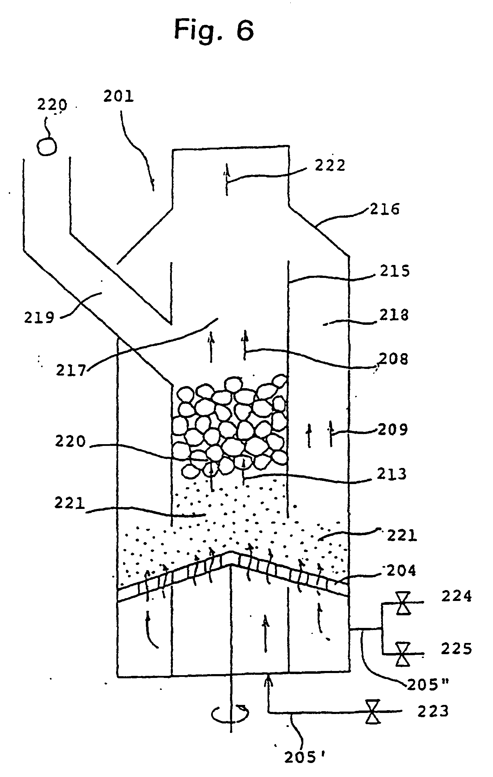

Fig. 6 is a schematic view illustrating another example of the fixed-bed gasification furnace of the present invention. This fixed-bed gasification furnace 201 has substantially the same construction as the fixed-bed gasification furnace of Fig. 5, except that the former is equipped with two gasifying agent supply pipelines. Specifically, this fixed-bed gasification furnace 201 has a gently sloping rotatable conical perforated plate 204 and an inner casing 215 defining an A-compartment 215 (i.e., a volatiles pyrolysis section) above it, within an outer casing 16 constituting the outer wall of fixed-bed gasification furnace 201. Inner casing 215 and outer casing 216 are dimensioned so that the ratio of the cross-sectional area of inner casing 215 to the cross-sectional area of the space between inner casing 215 and outer casing 216 (i.e., a B-compartment 218 constituting a fixed carbon partial combustion/gasification section) is equal to about 1:3. To a space below perforated plate 204, air 223 is supplied through a gasifying agent supply pipeline 205' and a gaseous mixture of oxygen 224 and steam 225 is supplied through a gasifying agent supply pipeline 205". In this furnace, air 223 supplied through gasifying agent supply pipeline 205' is introduced mainly into A-compartment, while the gaseous mixture of oxygen 224 and steam 225 supplied through gasifying agent supply pipeline 205" is introduced mainly into B-compartment.

Using this fixed-bed gasification furnace 201, the same scrap tires as used in Example 1 were subjected to a gasification test. Scrap tires 220, which had been cut into pieces, were fed to the upper part of A-compartment 217 within inner casing 215 through a charging chute 219. These scrap tires 220 were heated by a fixed carbon combustion gas 213 produced in the lower part of A-compartment 217 as a result of the partial combustion of a portion of the fixed carbon present in residue 221 with the aid of air 223 supplied as a gasifying agent, so that volatiles present therein were pyrolyzed and gasified to produce a volatiles-gasified gas 208. A portion of the resulting residue (consisting largely of fixed carbon) 221 is burned, while the remainder moved to B-compartment 218 with the rotation of perforated plate 204, and was partially burned and gasified with the aid of the gaseous mixture of oxygen 224 and steam 225 supplied as a gasifying agent. Thus, a fixed carbon-gasified gas 209 containing combustible components such as CO and H₂ was produced. This fixed carbon-gasified gas 209 was mixed with volatiles-gasified gas 208 in the upper part of the gasification furnace to produce a scrap tire-gasified gas 222.

When air 223 was supplied to A-compartment 217 at a molar equivalent ratio of 0.3 based on the fixed carbon (about 30 % by weight) present in scrap tires 220 (i.e., 0.8 Nm³ of air per kg of scrap tire), about a half of the fixed carbon was burned to produce a fixed carbon-gasified gas 213 containing CO, CO₂ and the like in addition to N₂ and having a temperature of about 1,000°C. Scrap tires 220 were heated by this fixed carbon-gasified gas 213, so that volatiles are pyrolyzed at about 500°C to produce a volatiles-gasified gas 208 containing high-molecular hydrocarbons. On the other hand, the fixed carbon remaining in residue 221 was partially burned and gasified in B-compartment 218 with a gaseous mixture of oxygen 224 and steam 225 containing oxygen and steam at molar equivalent ratios of 0.4 and 1.2, respectively (i.e., 0.11 Nm³ of oxygen and 0.34 Nm³ of steam per kg of scrap tire). Thus, there was obtained a fixed carbon-gasified gas 209 containing almost equal volumes of CO₂, CO, H₂ and H₂O and having a temperature of about 1,000°C.

## Claims

1. Fixed-bed gasification furnace wherein a gasifying agent comprising an oxygen-containing gas is supplied to the furnace (201) charged with organic waste (206), volatiles present in the organic waste are pyrolyzed and gasified in the upper part of the furnace, residual fixed carbon (207) is gasified by reaction with the gasifying agent in the lower part of the furnace, and the residual fixed carbon also serves to supply heat for the pyrolysis of the volatiles, the furnace comprising two divided internal sections: a volatiles pyrolysis section (202) for gasifying a portion of the residual fixed carbon (207) by reaction with the gasifying agent and for pyrolyzing and gasifying the volatiles by heat so evolved; and a fixed carbon partial combustion/gasification section (203) for reacting surplus fixed carbon with the gasifying agent (211);
**characterised in that** the furnace further comprises:
a first pipeline (205') for supplying a first gasifying agent (211') mainly to the volatiles pyrolysis section (202); and
a second pipeline (205")for supplying a second gasifying agent (211") mainly to the fixed carbon partial combustion/ gasification section (203), so as to allow the compositions and feed rates of the first and second gasifying agents to be controlled independently.

2. Method for the gasification of organic waste **characterized by** the steps of:
providing a fixed-bed gasification furnace which comprises two divided internal sections: a volatiles pyrolysis section for gasifying a portion of residual fixed carbon by reaction with a first gasifying agent and for pyrolyzing and gasifying volatiles by heat so evolved, and a fixed carbon partial combustion/gasification section for reacting only surplus fixed carbon with a second gasifying agent;
feeding organic waste to the furnace; and
controlling the composition and feed rate of the first and second gasifying agents for gasification of the organic waste, so that the temperature of the volatiles pyrolysis section is in a range of 500 to 700°C and the temperature of the fixed carbon partial combustion/gasification section is in a range of 700 to 1500°C.

## Patentansprüche

1. Festbettvergasungsofen, bei dem ein Vergasungsmittel mit einem sauerstoffhaltigen Gas dem mit organischem Abfall (206) befüllten Ofen (201) zugeführt wird, im organischen Abfall vorhandene flüchtige Stoffe im oberen Abschnitt des Ofens pyrolisiert und vergast werden, verbliebener fester Kohlenstoff (207) durch Reaktion mit dem Vergasungsmittel im unteren Abschnitt des Ofens vergast wird und der verbliebene feste Kohlenstoff auch dazu dient, Wärme zur Pyrolyse der flüchtigen Stoffe zu liefern, wobei der Ofen zwei getrennte innere Sektionen umfasst: eine Sektion zur Pyrolyse flüchtiger Stoffe (202), um einen Teil des verbliebenen festen Kohlenstoffs (207) durch Reaktion mit dem Vergasungsmittel zu vergasen und die flüchtigen Stoffe durch die **dadurch** entstandene Wärme zu pyrolysieren und zu vergasen, und eine Sektion zur teilweisen Verbrennung/Vergasung von festem Kohlenstoff (203), um überschüssigen festen Kohlenstoff mit dem Vergasungsmittel (211) zur Reaktion zu bringen,
**dadurch gekennzeichnet, dass** der Ofen ferner umfasst:
eine erste Rohrleitung (205'), um ein erstes Vergasungsmittel (211') hauptsächlich der Sektion zur Pyrolyse flüchtiger Stoffe (202) zuzuführen, und
eine zweite Rohrleitung (205"), um ein zweites Vergasungsmittel (211") hauptsächlich der Sektion zur teilweisen Verbrennung/Vergasung von festem Kohlenstoff (203) zuzuführen, damit die Zusammensetzungen und Zufuhrraten des ersten und des zweiten Vergasungsmittels unabhängig voneinander gesteuert werden können.

2. Verfahren zur Vergasung organischen Abfalls, das **gekennzeichnet ist durch** die Schritte:
Bereitstellen eines Festbettvergasungsofens, der zwei getrennte innere Sektionen umfasst: eine Sektion zur Pyrolyse flüchtiger Stoffe, um einen Teil des verbliebenen festen Kohlenstoffs **durch** Reaktion mit einem ersten Vergasungsmittel zu vergasen und die flüchtigen Stoffe **durch** die **dadurch** entstandene Wärme zu pyrolysieren und zu vergasen, und eine Sektion zur teilweisen Verbrennung/Vergasung von festem Kohlenstoff, um nur den überschüssigen festen Kohlenstoff mit einem zweiten Vergasungsmittel zur Reaktion zu bringen,
Zuführen von organischem Abfall in den Ofen, und
Steuern der Zusammensetzung und Zufuhrrate des ersten und des zweiten Vergasungsmittels zur Vergasung des organischen Abfalls, so dass die Temperatur der Sektion zur Pyrolyse flüchtiger Stoffe in einem Bereich von 500 bis 700°C und die Temperatur der Sektion zur teilweisen Verbrennung/Vergasung von festem Kohlenstoff in einem Bereich von 700 bis 1500°C liegt.

## Revendications

1. Four de gazéification à lit fixe dans lequel un agent de gazéification comprenant un gaz contenant de l'oxygène est alimenté dans un four (201) chargé d'un déchet organique (206), les composés volatils présents dans le déchet organique sont pyrolysés et gazéifiés dans la partie supérieure du four, le carbone fixé résiduel (207) est gazéifié par une réaction avec l'agent de gazéification dans la partie inférieure du four, et le carbone fixé résiduel sert aussi à alimenter en chaleur la pyrolyse des composés volatils, le four comprenant deux sections internes divisées :
une section de pyrolyse des composés volatils (202) pour gazéifier une partie du carbone fixé résiduel (207) par réaction avec l'agent de gazéification et pour pyrolyser et gazéifier les composés volatils par la chaleur ainsi dégagée ; et une section de combustion partielle/gazéification du carbone fixé (203) pour faire réagir le carbone fixé en excès avec l'agent de gazéification (211) ;
**caractérisé en ce que** le four comprend en outre :
une première tuyauterie (205') pour alimenter en un premier agent de gazéification (211') principalement la section de pyrolyse des composés volatils (202) ; et
une deuxième tuyauterie (205") pour alimenter en un deuxième agent de gazéification (211") principalement la section de combustion partielle/gazéification du carbone fixé (203), de façon à permettre de contrôler indépendamment les compositions et les débits d'alimentation des premier et deuxième agents de gazéification.

2. Procédé de gazéification d'un déchet organique, **caractérisé par** les étapes consistant à :
fournir un four de gazéification à lit fixe qui comprend deux sections internes divisées : une section de pyrolyse des composés volatils pour gazéifier une partie du carbone fixé résiduel par réaction avec un premier agent de gazéification et pour pyrolyser et gazéifier les composés volatils par la chaleur ainsi dégagée, et une section de combustion partielle/gazéification du carbone fixé pour faire réagir uniquement le carbone fixé en excès avec un deuxième agent de gazéification ;
alimenter en déchet organique le four ; et
contrôler la composition et le débit d'alimentation des premier et deuxième agents de gazéification pour la gazéification du déchet organique, de sorte que la température de la section de pyrolyse des composés volatils soit dans une plage de 500 à 700 °C et la température de la section de combustion partielle/gazéification du carbone fixé soit dans une plage de 700 à 1500 °C.
